# EUROPEAN PATENT SPECIFICATION

(11) **EP 2 152 092 B1**
(45) Date of publication and mention of the grant of the patent: **19.07.2017**
(21) Application number: 07722614.0
(22) Date of filing: 20.05.2007
(51) Int. Cl.: A23G 4/06, A23G 4/18, B65D 85/60, A23G 4/08

(54) **PACKAGED CONFECTIONARY PRODUCT**
VERPACKTES KONFEKTPRODUKT
PRODUIT DE CONFISERIE EMBALLÉ

(43) Date of publication of application: 17.02.2010
(73) Proprietor: Fertin Pharma A/S, 7100 Vejle (DK)
(72) Inventor: NEERGAARD, Jesper, DK-8362 Hørning (DK)
(74) Representative: Patentgruppen A/S
(86) International application number: PCT/DK2007/000235
(87) International publication number: WO 2008/141643

(56) References cited:
- WO-A-00/34145
- WO-A-99/32365
- WO-A-2004/028265
- WO-A-2004/028269
- WO-A-2004/028270
- CA-A1- 2 558 406
- US-A- 5 672 367
- US-A- 5 783 266
- US-A- 6 086 988
- US-A1- 2003 235 639
- US-A1- 2004 142 066
- US-A1- 2006 051 457

## Description

### Background of the invention

The invention relates to a packaged confectionary product according to claim 1.

It is well-known that chewing gum may be based on biodegradable gum polymers. Examples of such disclosure may be given in WO 00/19837 and US 5,672,367. Moreover WO 2004/028265 discloses a chewing gum composition with biodegradable gum polymers, wherein the chewing gum contains less than about 2.0 weight percent water.

Different problems related to biodegradable chewing gum have been addressed in the past. Examples of such challenges within the field of biodegradable chewing gum may e.g. be texture, release and degradability. A problem related to prior art biodegradable chewing gum is to obtain the desired degradation when disposed in the environment and this problem has been and can be dealt with in numerous different way, e.g. by application of biodegradable polymers featuring the desired degradability or application of enzymes which when applied in the chewing increases the degradation process after disposal.

In the prior art, biodegradable components of a chewing gum have mainly been water soluble or water extractable components as opposed to water insoluble. Such biodegradable, water extractable chewing gum ingredients may e.g. comprise different types of sweeteners (eg. polydextrose, insulin), starches or other polysaccharides, softeners, water soluble flavors components such as acids, etc. Several of these ingredients are hydrophilic and biodegradable.

One of several problems in relation to biodegradable chewing gum or chewing gum containing water insoluble or only slightly soluble, biodegradable gum polymers is, however, that these biodegradable gum polymers and the water soluble/water extractable degradable chewing gum ingredients act very differently when applied in chewing gum both prior to chewing, during chewing and after chewing.

The water soluble or water extractable, biodegradable polymeric ingredients are typically extracted from the chewing gum into the saliva during chewing and swallowed to become degraded in the ingestion system. Moreover, starches being plasticized rather than dissolved by water tend to start degrading already during chewing due to the presence of amylase enzymes in the saliva.

On the contrary, water insoluble, biodegradable gum polymers and protein based components tend to stay in the chewing gum composition during chewing and are thus disposed with other chewing gum remnants after chewing.

Among several other problems, the invention deals with the problem of timing the degradation between the water insoluble/only slightly soluble biodegradable gum polymers and the water soluble/water extractable chewing gum ingredients and moreover matching the overall properties of the chewing gum with the expectations of a user during chewing of the chewing gum product.

### Summary of the invention

The invention relates to a packaged confectionary product comprising a biodegradable chewing gum composition and a package assembly forming a humidity barrier to the biodegradable chewing gum composition, wherein the water content within the package assembly is less than 2.0% by weight of the packaged chewing gum composition and wherein the moisture vapor transmission rate (MVTR) of the packaging material forming the humidity barrier is less than 3g/m2/24hr with reference to DIN 23°C, 85% RH/DIN 53122..

According to an embodiment of the invention significant reduction of pre-degradation (ie. degradation prior to chewing of the chewing gum) of gum polymers may be obtained if the confectionary product is encapsulated within a package assembly which comprises a humidity barrier to the chewing gum composition contained in the package.

According to a preferred embodiment of the invention, establishment of such a humidity barrier for the purpose of avoiding intrusion of humidity, e.g. water, from the exterior of the package into the biodegradable chewing gum composition results in a stable product which may even under elevated temperature exhibit low tendency of pre-degradation.

The chewing gum product may be formed into cores, sticks, balls, cubes, and any other desired shape, optionally followed by coating and polishing processes prior to packaging.

Sealing of the package assembly is very advantageous compared with e.g. packages comprising a cardboard or polymer based wrapping merely folded around the packaged chewing gum, as the folding lines inevitable form ducts through which air and moisture may migrate.

According to the invention, humidity barrier designates a barrier which prevents critical migration. This may be obtained by the use of barriers reducing to humidity migration to a level which does not affect the biodegradable chewing gum composition critically during the initial phase, i.e. the period between manufacture and when a consumer breaks the packaga assembly for the first time.

Furthermore, the phrasing "gum polymer" as used herein also relates to polypeptides or protein based compounds. Examples of such protein based compounds include but are not limited to prolamine, zein, corn gluten meal, wheat gluten, gliadin, glutenin and combinations thereof.

According to a further advantageous embodiment, a biodegradable polymer should be synthetic.

In an embodiment of the invention the humidity barrier (HB) is sealed.

The sealing of the humidity barrier may be performed by means of known measures such as adhesive, heat sealing, mechanical sealing, as long as the moisture vapour transmission rate (MVTR) is kept low.

In an embodiment of the invention the package assembly comprises a blister package.

In an embodiment of the invention the package assembly comprises a plastic container. The plastic container may e.g, comprise ajar, a tub or any other suitable package system as long as it is sealed.

In an embodiment of the invention the package assembly comprises a bag.

In an embodiment of the invention the package assembly comprises a barrier forming wrapping film (eg. cellophane) formed with a humidity sealing without mechanically formed humidity transmission duct.

In an embodiment of the invention the package assembly comprises a cardboard box formed with a humidity sealing without mechanically formed humidity transmission duct.

The above two package assemblies must, in order to function properly at least be formed with a humidity sealing keeping the MVTR low.

In an embodiment of the invention the humidity barrier comprises a polymer material.

An example of a suitable humidity barrier formed by a polymer material may be a plastic container. The container may comprise a breakable sealing. The sealing may e.g. be partly comprised by a lid which, when removed, enables access to the interior of the package assembly and thereby the gum composition and moreover enables reclosure when access is no longer desired.

In an embodiment of the invention the humidity barrier comprises a polymer cantaining film material.

An example of a suitable humidity barrier formed by a polymer material film may be a sealed bag formed of single layer or laminated polymer films. The bag may e.g. comprise a sealing formed by adhesive, heat sealing of films or any suitable reliable sealing. The sealing may be one-time only breakable or preferable re-closable.

In an embodiment of the invention the humidity barrier comprises a laminate.

Advantageously, humidity barriers may be formed by two or more laminated layers. The layers may e.g. be formed by different types of polymer film and/or metal films. A variant of metal films may be a metalized polymer film.

In an embodiment of the invention the barrier comprises at least one metal foil.

The metal foil may advantageously be applied for the purpose of obtaining very low moisture vapour transmission rate (MVTR).

The metal foil of the package assembly may typically be laminated to at least one polymer film, thereby obtaining a two, three or higher multiple layer laminate.

In an embodiment of the invention the barrier comprises at least one aluminum foil.

In an embodiment of the invention the chewing gum composition is contained within a package assembly in individually sealed compartments.

An example of a suitable way of keeping a chewing gum composition in a sub-compartment in the package assembly may e.g. be a so-called blister package where a number of chewing gum pieces are kept in individually sealed compartments.

In an embodiment of the invention the chewing gum composition is contained within a package assembly in a shared sealed compartment.

When keeping a larger number of chewing gum pieces in one compartment, it would typically be preferred that the package assembly is re-closable as the breaking of the sealing may initiate pre-degradation of the chewing gum pieces left after the first access.

In an embodiment of the invention the chewing gum composition is contained within a package assembly which is re-closable.

According to an embodiment of the invention, the package may be re-closable by means of a zipper sealing, adhesive, etc.

In an embodiment of the invention the chewing gum composition comprises coated chewing gum pieces.

According to an embodiment of the invention, a chewing gum piece

The chewing gum composition may preferably be formed in pieces availing the user to chew the chewing gum composition. The form and size of the chewing gum piece by be any suitable form availing chewing and storage in a sealed package assembly.

In an embodiment of the invention the package assembly is vacuum packed.

In an embodiment of the invention the package assembly comprises at least one inert gas such as nitrogen.

A controlled atmosphere within the inner volume of the package assembly may advantageously be applied for avoiding unintended oxygen triggered degradation.

In an embodiment of the invention the moisture vapor transmission rate ***(MVTR)*** of the packaging material is less than 2g/m²/24hr with reference to DIN 23°C, 85% RH/DIN 53122.

In an embodiment of the invention the moisture vapor transmission rate ***(MVTR)*** of the packaging material is less than 1g/m²/24hr with reference to DIN 23°C, 85% RH/DIN 53122.

According to a preferred embodiment of the invention, the MVTR of the packaging material should be as low as less than about 1g/m²/24hr with reference to DIN 23°C, 85% RH in order to counteract pre-degradation at temperatures higher than about 21° C.

In an embodiment of the invention the moisture vapor transmission rate *(MVTR*/*WVTR)* of the packaging material is less than 1g/m²/24hr with reference to ASTM (38 °C 90 % RH/F1249).

In an embodiment of the invention the biodegradable gum polymer is resinous or elastomeric

In an embodiment of the invention the inner volume is re-closable.

In an embodiment of the invention the inner volume of the packaging assembly is encapsulated by a light barrier (LB).

The light barrier may e.g. comprise a metalized film material which e.g. may be laminated to further polymer films. The light barrier may help counteracting pre-degradation triggered or accelerated e.g. by means of light from the environment, e.g. sun light.

In an embodiment of the invention the chewing gum composition comprises a polyester polymer.

Polyester may e.g. included polyester obtained through polymerization of cyclic esters and polyester obtained through a condensation process of di- or polyfunctional acids and di- or polyfunctional alcohols. Variations of such polymers may include polyesters obtained through other suitable types and modifications of polymerization processes. Moreover such polyesters may also include polyester which have be hydrogen bonded to a protein, e.g. prolamine, e.g. zein, corn gluten, wheat gluten, gliadin, glutenin and any combinations thereof.

The polyesters formed on the basis of di- or polyfunctional acids and di- or polyfunctional alcohols may be produced according to known methods, one of which includes US2007/043200, hereby included by reference.

In an embodiment of the invention the chewing gum composition comprises a protein composition which preferably is a prolamine composition.

The prolamine composition may for instance comprise at least one prolamine and at least one polyester polymer.

The prolamine may e.g. be selected from the group consisting of zein, corn gluten meal, wheat gluten, gliadin, glutenin and any combination thereof. Methods of providing such a polymer is disclosed in US2004/001903 hereby included by reference.

In an embodiment of the invention chewing gum composition comprises a prolamine composition.

In an embodiment of the invention the chewing gum composition comprises at least one protein or protein derivative.

In an embodiment of the invention said chewing gum composition comprises a polyurethane polymer.

In an embodiment of the invention the chewing gum composition is formed as centre filled chewing gum.

In an embodiment of the invention the chewing gum composition is formed as compressed chewing gum.

In an embodiment of the invention the chewing gum composition is formed with a coating.

The coating may e.g. include soft coating, hard coating, film coating or any suitable coating. It is noted that a coating may counteract the pre-degradation even further.

In an embodiment of the invention the water content of the package assembly is less than 1.5% by weight of the packaged chewing gum composition

### The drawings

The invention will now be described with reference to the drawings of which
fig. 1a and 1b illustrates a chewing gum product according to a preferred embodiment of the invention,
fig, 2 illustrates a chewing gum product according to a further embodiment of the invention,
fig. 3 illustrates a chewing gum product according to a further and preferred embodiment of the invention and where fig. 4 illustrates a chewing gum product according to a further and preferred embodiment of the invention..

### Detailed description

As used herein, the term "biodegradable" broadly designates the ability of the applied gum polymers to degrade when subjected to environmental influence, e.g. moist, water, heat, sunshine, UV light, cleaning, etc. Hence, the term "biodegradable" as used herein designates also chemical degradation (eg. hydrolysis) and physical degradation (eg. photo induced degradation). It is typically preferred that a chewing gum residue left in the nature vanishes or degrades at least partly when left in the environment, but it is noted that biodegradable also designates a more active process where the degradation is increased, triggered or accelerated by actively induced measures or physical factors such as for example enzymatic degradation. Such an active measure may e.g. also relate to the use of cleaning agents dedicated to the purpose of triggering a degradation of the chewing gum residue rather than necessarily facilitating immediate removal. Such environmental degradation may of course also refer to a complete degradation of the chewing gum residue but it may also in many cases refer to the obtaining of non-tack to surface, either by avoiding any tack at all to a surface or at least obtaining a release from a surface by a residue which has already been fastened to a surface.

As used herein, the phrasing "gum polymer" relates to the polymeric material defining the basic properties of chewing gum, i.e. the properties of the substance which doesn't dissolve within a few minutes or hours when the chewing gum is chewed in the mouth. Such gum polymers may e.g. relate to elastomer and/or resinous polymers typically applied as the main functioning part of the "gum backbone" of the chewing gum. It should however be noted that such a backbone under some circumstances, typically when plasticized properly, may be formed by one or several elastomers alone or by one or several resinous polymers. In the present context, no distinction is made between such gum polymers and the use of these in the gum composition, and a gum polymer broadly designates the chew resistant part of the chewing gum providing the gum properties. Such gum polymers may also be regarded as gum base polymers.
Furthermore, the phrasing "gum polymer" as used herein also relates to polypeptides or protein based compounds. Examples of such protein based compounds include but are not limited to prolamine, zein, corn gluten meal, wheat gluten, gliadin, glutenin and combinations thereof.

A number of examples will be explained below for the purpose of demonstrating a number of important issues related to the present invention.

The examples include the provision of a number of chewing gums based on biodegradable and non-biodegradable gum polymers.

### Example 1

Conventional butyl rubber, natural resin and low Mw (molecular weight) PVA was provided.
The mixture is specified in example 5.

### Example 2

A poly lactic acid based polymer was provided according to the provision of WO2004/028269, hereby included by reference.

### Example 3A

A polyester based polymer blend being formed on the basis of a prolamine which is hydrogen bonded to a polyester. The polymer blend is provided according to the provisions of US 6,858,238 B2, hereby included by reference.

### Example 3B

A Zein based polymer according to US 5,482,722 hereby included by reference was provided.

### Example 4

A polyester was provided according to the provisions of US2007/043200 hereby included by reference.

A number of chewing gums ware subsequently manufactured according to the below formulations. The processes were made according to a two-step process as disclosed according to WO2006066576hereby included by reference. Other suitable mixing processes may also be applied within the scope of the invention.

### Example 5 - 9

| Mixed chewing gums | Ex. 5 | Ex. 6 | Ex. 7 | Ex.8 | Ex. 9 |
|---|---|---|---|---|---|
| Butyl rubber | 3,5 | | | | |
| Polyester of ex. 4 | | | | 40,0 | |
| Polyester of ex. 2 | | 40,0 | | | |
| Corn zein of ex. 3A | | | 40,0 | | |
| Zein of ex. 3B | | | | | 40,0 |
| Natural resin | 7,2 | | | | |
| PVA low Mw | 8,1 | | | | |
| Softener | 8,2 | | | | |
| Filler | 13,0 | | | | |
| Sorbitol powder | 45,6 | 45,6 | 42,6 | 45,6 | 45,6 |
| Lycasin | 6,0 | 6,0 | 9,0 | 6,0 | 6,0 |
| Peppermint oil | 1,5 | 1,5 | 1,5 | 1,5 | 1,5 |
| Menthol crystals | 0,5 | 0,5 | 0,5 | 0,5 | 0,5 |
| Aspartame | 0,2 | 0,2 | 0,2 | 0,2 | 0,2 |
| Acesulfame-K | 0,2 | 0,2 | 0,2 | 0,2 | 0,2 |
| Xylitol | 6,0 | 6,0 | 6,0 | 6,0 | 6,0 |
| Total (% by weight): | 100,0 | 100,0 | 100,0 | 100,0 | 100,0 |

### Examples 10

The chewing gums of Examples 5 to 9 were evaluated with respect to timing of degradation.

The evaluation was made with reference to three phases: the phase before chewing (the initial phase), the phase during chewing (the chew phase) and finally the phase after chewing (the after chew phase).

The initial phase had duration of 1 day after manufacture of the chewing gums according to examples 5-8 and the samples were stored without packaging in air having a relative humidity of about 55% at a temperature of about 21 °C.

The chew phase had duration of about 15 minutes at a temperature of about 37°C, i.e. mouth temperature. The main part of the water soluble/water extractable ingredients (designated as "non-gum polymer ingredients" in this example), e.g. sweeteners and some flavour components, were released from the chewing gum. The remaining chewing gum lump was then evaluated in the subsequent after chew phase.

The after chew phase lasted six months under the same conditions as the initial phase, namely relative humidity of about 55% at a temperature of about 21°C.

| | Initial phase | | Chew phase | | After chewing | |
|---|---|---|---|---|---|---|
| | Non-gum polymer ingredients | Gum polymers | Non-gum polymer ingredients | Gum polymers | Non-gum polymer ingredients | Gum polymers |
| Ex. 5 | Ok | | Ok | Ok | - | Not Ok |
| Ex. 6 | Ok | | Ok | Ok | - | Ok |
| Ex. 7 | Ok | | Ok | Ok | - | Ok |
| Ex. 8 | Ok | | Ok | Ok | - | Ok |

The initial phase was evaluated visually immediately prior to chewing. The marking "OK" indicated that the visual test showed no sign of degradation or migration of sweeteners in relation to any of the evaluated chewing gums.

The chew phase was evaluated with respect to taste and texture. All the provided examples had acceptable taste and texture. The marking "OK" indicated that no discomfort was found, and the acceptable taste and texture indicated that both non-gum ingredients and gum polymers had not initiated significant degradation.

The after-chew phase was evaluated primitively with respect to taste and texture. The biodegradable chewing gums showed clear signs of degradation by indication of off-notes and deteriorating texture. In this phase, the marking "OK" indicates that the desired degradation has started and that this degradation mainly must relate to gum polymers as the main portion of the non-gum polymer ingredients has been extracted during chewing. In this phase, the term "Not OK" indicates that no indication of degradation has been found.

### Example 11

The chewing gums of Examples 5 to 9 were evaluated with respect to timing of degradation under modified conditions, now performing the evaluation on the basis of an initial phase which is somewhat longer than the evaluation of Example 10.

Again, the evaluation was made with reference to three phases: the phase before chewing (the initial phase), the phase during chewing (the chew phase) and finally the phase after chewing (the after chew phase).

The initial phase had duration of 2 months after manufacture of the chewing gums according to examples 5-8 and the samples were stored without packaging in air having a relative humidity of about 55% at a temperature of about 21°C.

The chew phase had duration of about 15 minutes at a temperature of about 37°C, i.e. mouth temperature. The main part of the water soluble/water extractable ingredients (designated as "non-gum polymer ingredients" in this example), e.g. sweeteners and some flavour components, were released from the chewing gum. The remaining chewing gum lump was then evaluated in the subsequent after chew phase.

The after chew phase lasted six months under the same conditions as the initial phase, namely relative humidity of about 55% at a temperature of about 21°C.

| | Initial phase | | Chew phase | | After chewing | |
|---|---|---|---|---|---|---|
| | Non-gum polymer ingredients | Gum polymers | Non-gum polymer ingredients | Gum polymers | Non-gum polymer ingredients | Gum polymers |
| Ex. 5 | Ok | | Ok | Ok | - | Not Ok |
| Ex. 6 | Ok | | Ok | Not Ok | - | Ok |
| Ex. 7 | Ok | | Ok | Not Ok | - | Ok |
| Ex. 8 | Ok | | Ok | Not Ok | - | Ok |

The initial phase was evaluated visually immediately prior to chewing. The marking "OK" indicated that the visual test showed no sign of degradation and only a slight indication of migration of sweeteners.

The chew phase was evaluated with respect to taste and texture. In this example, the conditions of the experiments invoked radical changes of the taste and texture properties in spite of the fact that the visual evaluation showed only few signs of pre-degradation. In spite of the fact that the evaluated chewing gums were formulated with a relatively low water content, strong indications of degradation were observed as all the evaluated chewing gums based on biodegradable gum polymers exhibited strong off-notes after about 10 minutes of chewing. It is clear that these off-notes for some of the tested chewing gums originate from monomeric and/or oligomeric residues resulting from degraded gum polymers. It is moreover noted that the off-notes resulting from these degradation residues are significant and appear impossible to mask at intermediate to long chewing times.

The chewing gum of example 5 based on conventional non-degradable gum polymers exhibited no off-taste.

During the first few minutes of the chew phase, the taste for all chewing gums based on biodegradable gum polymers was found acceptable and resembled the taste observed in the previous example 10. This indicated that the non-gum polymer components appeared non-effected by the longer storage time compared with the gum polymers.

Again, the after-chew phase was evaluated primitively with respect to taste and texture. The biodegradable chewing gums showed clear signs of degradation by indication of off-notes and deteriorating texture. In this phase, the marking "OK" indicates that the desired degradation has started and that this degradation mainly must relate to gum polymers as the main portion of the non-gum polymer ingredients has been extracted during chewing. In this phase, the term "Not OK" indicates that no indication of degradation has been found.

In conclusion, it has been established that biodegradable gum polymers and other biodegradable chewing gum ingredients degrade completely out of phase and that in particular undesired pre-degradation of the gum polymers must be addressed in order to establish reasonable possibilities of storage and distribution prior to the chewing by the end-consumer.

### Example 12

The chewing gums of Examples 6 to 8 were evaluated with respect to timing of degradation according to the provisions of the invention.

This time, the evaluation was focussed on the state of the chewing gum immediately prior to chewing, i.e. the resulting performance of the chewing gum when the chewing gum has been packaged and stored according to the provisions of the invention.

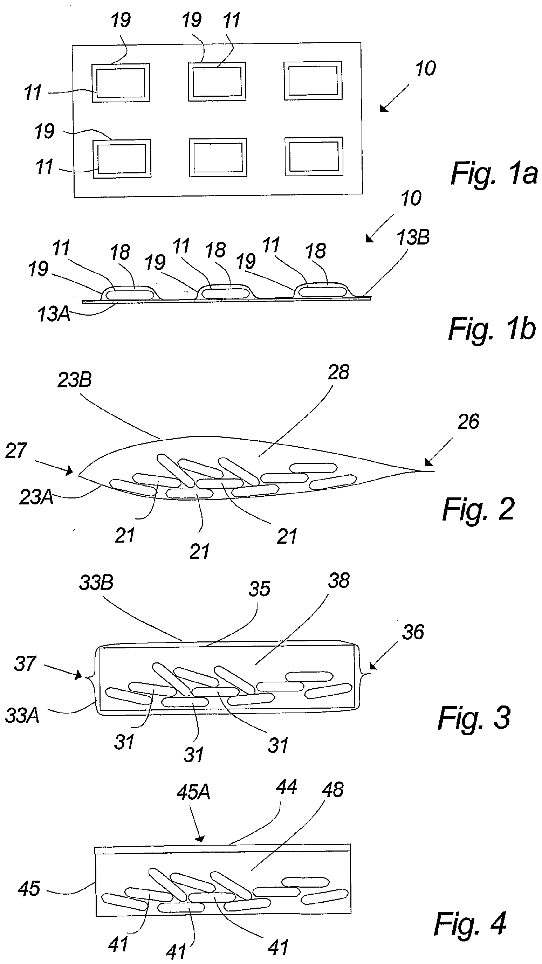

Immediately after manufacturing the chewing gum compositions of examples 6-8, the chewing gum mass was rolled and scored into chewing gum cores prior to packaging. The cores were packed at a relative humidity of about 50% at a temperature of about 21°C.
The test involved the application of different types of package assemblies for containing the chewing gum based on biodegradable gum polymers of examples 6-8. The applied package types were laminated paper-wrapping, cardboard flip top box wrapped in PE film, a blister package according to fig. 1a and 1b, a plastic container according to fig. 4, an alu bag according to fig. 3 and a vacuum bag.

The laminated paper-wrapping corresponds to a typical chewing gum package which has been mechanically wrapped around the chewing gum cores, i.e. non-sealed. The flip-top box is made of cardboard and was subsequently provided with a polymer non-sealed polymer film wrapping.

The remaining packages were sealed.

The initial phase had duration of 2 months after manufacture of the chewing gums according to examples 5-8 and the subsequent inclusion of the product in the packaging assembly. The samples were stored in air having a relative humidity of about 55% at a temperature of about 21°C.

The state of the chewing gum cores contained in the packaging assemblies was then evaluated by taste.

| **Package type** | **Ex. 6-8** |
|---|---|
| Laminated paper-wrapping | Not-OK |
| Flip top box | OK |
| Blister package | OK |
| Plastic container | OK |
| Alu bags | OK |
| Vacuum bags | OK |

It was established that the non-sealed package formed by a laminated paper-wrapping could not counteract the problematic pre-degradation, whereas the packages which were sealed either by means of heat-sealing (welding), adhesive or a tight mechanical sealing (the plastic container) counteracted pre-degradation effectively. In this example it was however noted that the wrapped non-sealed flip-top box resulted in an acceptable performance.

### Example 12

The experiment of example 11 was repeated but now raising the storage temperature to 30°C and a relative humidity of about 70%.

Again, the sealed packages proved to be a sufficient barrier against intrusion of humidity and oxygen, but now the flip-top box proved inferior to the sealed package assemblies.

It was however also clearly established that non-sealed packages could not counteract the problematic pre-degradation, whereas the packages which were sealed either by means of heat-sealing (welding), adhesive or a tight mechanical sealing (the plastic container) counteracted pre-degradation effectively.

Even more surprising, it was realised that, although the temperature was increased, the critical pre-degradation was still counteracted in spite of the fact that the elevated temperature would invoke the moisture contained in the cores which in itself could trigger or accelerate pre-degradation.

A conclusion, upon which the invention relies at least partly, is thus that pre-degradation does not depend solely on the water contained within the manufactured chewing gum, but also relies significantly on the moisture migrating into the chewing gum during storage prior to use. This is somewhat surprising as the degradation subsequent to chewing involves saliva added to the gum during chewing and moreover surprising as the non-gum polymer chewing gum ingredients appear to have no or at least less tendency of pre-degradation compared to the biodegradable gum polymers.

The following part of the description discloses different non-limiting packaging assemblies applicable within the scope of the invention.

FIG. 1a and 1b illustrates a blister-pack assembly 10According to an embodiment of the invention

The blister pack assembly 10comprises three basic components, a bottom 13b and a top layer 13a and finally chewing gum pieces 11 according to the provisions of the invention.

The chewing gum pieces are kept in compartments 18 at least partly defined by a part of 19 the bottom layer 13b. The chewing gum pieces are made on a basis of biodegradable gum polymer, e.g. according to example 6-9. The package forms a humidity barrier encapsulating the individual chewing gum pieces.

Numerous satisfactory sheet materials for the blister sheet 13a and 13b are available. These conventional materials include polymeric and metallic materials and laminates including these materials, typically with conventional adhesives for forming peelable connections between the blister and lid. The particular materials described below are merely exemplary of numerous commercially available materials. The illustrated bottom layer 13b of the package is formed from a blister sheet comprising a laminate material formed to provide compartments 18 as further described below.

The bottom layer 13b may e.g. comprise a about 60 micron thick layer of polyvinyl chloride (PVC). A 25 micron thick layer comprising a polyamid film which may overlie the PVC layer and is secured to the PVC layer by an adhesive. A 60 micron layer of aluminum foil may overlie the polyamid film and is secured to the polyamid film with an adhesive. Another 60 micron layer of PVC can be adhered to the aluminum foil using an adhesive. The number of layers in the laminate, the composition of these and the thickness of these layers may be modified to fit the desired properties.

The upper layer must be suitable for 13a serving the purpose of obtaining the required and secure sealing, but also to ensure easy removal when a user intends to access the sub-compartment
A significant advantage of the illustrated blister package is that the sealing related to the different chewing gum pieces may be broken individually without resulting in any migration of humidity to the other sealed compartments.

A basic idea of the invention is to counteract or even avoid pre-degradation by means of using a suitable packaging and by keeping the chewing gum composition inside a humidity barrier where migration of humidity is significantly reduced when compared to e.g. conventionally paper wrapped chewing gum products.

When applying blister packages the obtainable moisture vapor transmission rate ***(MVTR)*** will depend on the effective sealing of the chewing gum composition contained in the package.

Different MVTR values obtainable are listed below.
A-PET blister package: 2 g/m²/24hr
Duplex blister package with laminate layers of PVC(Polyvinylchloride )/PVDC(Polyvinyldichloride): 0,25 g/m²/24hr
Triplex blister package with a laminate layers of PVC(Polyvinylchloride )/PE(Polyethylene )/PVDC(Polyvinyldichloride): 0,03 g/m²/24hr
The values refer to DIN 23°C 85% RH. (DIN 53122)

Different types of suitable blister packages may also include US 4,211,326 or more modem blister pack assemblies, preferable based on at least one metalized film.

It is preferred to keep the MVTR values below 2 g/m²/24hr, preferably below 1.5 g/m²/24hr in order to counteract pre-degradation when the temperature changes due to changed storage conditions.

Fig. 2 illustrates a cross-section of a further embodiment of the invention where two films 23a and 23b are joined at the ends 27 and 26. The joining may e.g. be established be heat sealing. The two films 23a and 23b define an inner volume 28 for containing of chewing gum pieces 21.

The chewing gum pieces are made on a basis of biodegradable gum polymers, e.g. according to example 6-8. The bag forms a humidity barrier encapsulating the chewing gum pieces.

As an alternative to the above mentioned joining of two films, the illustrated bag may advantageously be formed on the basis of one film, which is folded as one side and welded at the other three sides.

The applied film material may comprise any suitable material, e.g. a single layer, multilayer, comprises foam, bubble sheets, etc. It is however strongly preferred to apply a multilayer laminate to obtained the desired low MVTR values of about less than 2 g/m²/24hr, preferably below 1.5 g/m²/24hr in order to counteract pre-degradation when the temperature changes due to changed storage conditions.

Fig. 3 illustrates a further embodiment within the scope of the invention.

This embodiment comprises a box 35, inside which 38 a number of chewing gum pieces 31 are contained.

The box is encapsulated by a humidity barrier formed by a film sheet material 33a and 33b. Again, as above, the film material may be made on the basis of one or e.g. two sheets which are welded together in joining 36 and 37. The humidity barrier may comprise any suitable material, e.g. a single layer, multilayer, comprises foam, bubble sheets, etc. It is however strongly preferred to apply at least a single or two layer laminate to obtained the desired low MVTR values of about less than 2 g/m²/24hr, preferably below 1.5 g/m²/24hr in order to counteract pre-degradation when the temperature changes due to changed storage conditions.

Fig. 4 illustrates a further embodiment of the invention.

The illustrated package assembly comprises a plastic container 45 formed with a lid 44. The plastic container may e.g. be formed on the basis of HDPE (High Density Polyethylene).

The container 45 defines an inner volume 48 in which a number of chewing gum pieces 41 are arranged. The chewing gum pieces are made on a basis of biodegradable gum polymer, e.g. according to example 6-8. The container forms a humidity barrier encapsulating the chewing gum pieces.

The sealing defined by the lid may if necessary be supplemented with a further breakable or removable sealing ensuring a low level of humidity migration into the inner volume, at least prior to the first access to the package.

According to a preferred embodiment, the lid should enable a sufficient sealing to avoid pre-degradation within at least one week after the initial access.

The plastic container may be made of any suitable material and the wall of the container may be single layer, multilayer, comprises foam, bubble sheets,, etc.
The above illustrated packages may be formed with any suitable indication of the product enabling the user to identify and handle the product properly.

In the above embodiments the water content of the package assemblies formed by the humidity barrier should preferably be less than 2.5% by weight of the packaged chewing gum composition. This is ensured by keeping the water content of the chewing gum composition low and at the same time ensuring that the package is sealed properly - of course while keeping the humidity low during the sealing process.

In an embodiment of the invention the water content of the package assembly within the humidity barrier should preferable be less than 3.0% by weight of the packaged chewing gum composition after storage of the chewing gum composition for about two months.

Generally, the films applied to form the above illustrated package assemblies may comprise a single or a multilayer web-material.

The films may be transparent or at least partly transparent to light. The films may also be provided with a UV filter to protect the chewing gum composition held in the package assembly.
The films may preferably comprise polymer films optionally supplemented by metal films. According to a preferred embodiment, however, the complete package is made substantially free of metals or at least such small an amount to render the package burnable when disposed in a relatively environmentally attractive way.
At least the inner part of the package assembly should be made of liquid-impermeable material.

In an embodiment of the invention, the sheets of liquid-impermeable material comprise multilayered sheets.

In an embodiment of the invention, said sheets of liquid-impermeable material comprise a laminate of at least one polymer sheet and at least one metal sheet.

In an embodiment of the invention, the sheets of liquid impermeable material comprises at least one film or foil selected from the group of metal foils, polymer films, metalized or coated films, polymer sealants, polyesters, polyamides and polyolefines comprising polyethylenes and polypropylenes or any combination thereof.

In an embodiment of the invention, said liquid-impermeable material of the package assembly has a thickness in the range of 10 µm to 2 mm, preferably 40 µm to 500 µm, more preferably 60 µm to 200 µm and most preferably 80 µm to 150 µm.

In an embodiment of the invention, said multilayer structure of the package assembly comprises an outside film, an optional intermediate barrier layer and an inside layer of polymer sealant.

The film(s) or the solid package assembly defining walls may for example comprise a multilayer laminate material comprising three layers: An outside layer made of PETP, an intermediate layer as barrier layer made of aluminum foil, e.g. a 9 µm foil and an inside layer forming a sealant comprising 80 to 120 µm polyethylene (PE). The multilayer laminate material may typically comprise two or further layers.

The package assembly may also comprise another sealing medium layer of the first side wall section which may be a copolymer comprising polyethylene and polypropylene and an inner sealing medium layer of the package assembly which is substantially made from polyethylene. Such structure may e.g. facilitate that the package assembly is form-stable.

For the manufacture of the package assembly according to the invention one or more flexible films may be used which have at least one inner heat-sealable surface, preferably comprising a polyolefin, i.e. PE or PP. Preferably, a softer or more flexible, e.g. thicker, film is used for the top and bottom walls than for the side walls to obtain the intended expansion and standing properties. Furthermore, multilayer films are preferably used comprising an inner heat-sealable surface layer. For the manufacture of the package assembly the laminate COEX OPP/PETP (polyester) may for instance be used, in which the PE layer is on the inner side seen in relation to the finished or prefabricated and COEX OPP denotes a CO-extruded oriented polypropylene film on either side provided with a thin sealing medium layer comprising a copolymer of PP and PE. In order to obtain enhanced barrier properties a barrier layer, e.g. a metallization layer or an aluminum film, may be provided between the PETP layer and the PE layer or between the COEX OPP film and the PETP layer.
Furthermore, the PETP layer may be replaced by an oriented polyamide, OPA.

## Claims

1. Packaged confectionary product comprising a biodegradable chewing gum composition (11; 21; 31; 41) and a package assembly forming a humidity barrier (13a, 13b; 23a, 23b; 33a, 33b; 44, 45) to the biodegradable chewing gum composition (11; 21; 31; 41), wherein the water content within the package assembly is less than 2.0% by weight of the packaged chewing gum composition and wherein the moisture vapor transmission rate (MVTR) of the packaging material forming the humidity barrier is less than 3g/m2/24hr with reference to DIN 23°C, 85% RH/DIN 53122.

2. Packaged confectionary product according to claim 1, wherein the humidity barrier (HB) is sealed.

3. Packaged confectionary product according to claim 1 or 2, wherein the package assembly comprises a blister package, a bag, and/or a plastic container, such as ajar, a tub etc..

4. Packaged confectionary product according to any of the claims 1-3, wherein the humidity barrier comprises a polymer material, a polymer containing film material, a laminate, at least one metal foil, and/or at least one aluminum foil.

5. Packaged confectionary product according to any of the claims 1-4, wherein the chewing gum composition is contained within the package assembly in individually sealed compartments and/or in a shared sealed compartment.

6. Packaged confectionary product according to any of the claims 1-5, wherein the chewing gum composition is contained within the package assembly which is re-closable.

7. Packaged confectionary product according to any of the claims 1-6, wherein the chewing gum composition comprises chewing gum pieces.

8. Packaged confectionary product according to any of the claims 1-7, wherein the package assembly is vacuum packed.

9. Packaged confectionary product according to any of the claims 1-8, wherein the package assembly comprises at least one inert gas such as nitrogen.

10. Packaged confectionary product according to any of the claims 1-9, wherein the moisture vapor transmission rate *(**MVTR**)* of the packaging material is less than 2g/m²/24hr, preferably less than 1g/m²/24hr with reference to DIN 23°C, 85% RH/DIN 53122.

11. Packaged confectionary product according to any of the claims 1-10, wherein the biodegradable chewing gum composition comprises at least one resinous and/or elastomeric biodegradable gum polymer.

12. Packaged confectionary product according to any of the claims 1-11, wherein the inner volume (18; 28; 38; 48) is encapsulated by a light barrier (LB).

13. Packaged confectionary product according to any of the claims 1-12, wherein said chewing gum composition comprises a polyester polymer, a prolamine composition, at least one protein or protein derivative, and/or a polyurethane polymer.

14. Packaged confectionary product according to any of the claims 1-13, wherein the chewing gum composition is formed as centre filled chewing gum, compressed chewing gum and/or uncoated stick chewing gum.

15. Packaged confectionary product according to any of the claims 1-14, wherein the chewing gum composition is formed with a coating.

16. Packaged confectionary product according to any of the claims 1-15, wherein said biodegradable chewing gum composition exhibits non-tack to surface.

## Patentansprüche

1. Verpacktes Süßwarenprodukt, das eine biologisch abbaubare Kaugummimischung (11; 21; 31; 41) umfasst sowie eine Verpackungseinheit, die für die biologisch abbaubare Kaugummimischung (11; 21; 31; 41) eine Feuchtigkeitssperre (13a; 13b; 23a; 23b; 33a; 33b; 44; 45) bildet, wobei der Wassergehalt innerhalb der Verpackungseinheit weniger als 2,0 % nach Gewicht der verpackten Kaugummimischung beträgt und wobei die Moisture Vapor Transmission Rate (MVTR, Wasserdampf-Durchlässigkeitsrate) des Verpackungsmaterials, das die Feuchtigkeitssperre bildet, weniger als 3g/m²/24h mit Bezug auf die DIN 23°C, 85% RH/DIN 53122 beträgt.

2. Verpacktes Süßwarenprodukt nach Anspruch 1, wobei die Feuchtigkeitssperre (HB) abgedichtet ist.

3. Verpacktes Süßwarenprodukt nach Anspruch 1 oder 2, wobei die Verpackungseinheit eine Blisterverpackung, einen Beutel und/oder einen Kunststoffbehälter, wie etwa ein Gefäß, eine Schale etc., umfasst.

4. Verpacktes Süßwarenprodukt nach einem der Ansprüche 1 bis 3, wobei die Feuchtigkeitssperre ein Polymermaterial, ein Polymer enthaltendes Folienmaterial, einen Schichtstoff, wenigstens eine Metallfolie und/oder wenigstens eine Aluminiumfolie umfasst.

5. Verpacktes Süßwarenprodukt nach einem der Ansprüche 1 bis 4, wobei die Kaugummimischung innerhalb der Verpackungseinheit in einzeln abgedichteten Kammern und/oder in einer gemeinsam abgedichteten Kammer enthalten ist.

6. Verpacktes Süßwarenprodukt nach einem der Ansprüche 1 bis 5, wobei die Kaugummimischung innerhalb der Verpackungseinheit enthalten ist, die wiederverschließbar ist.

7. Verpacktes Süßwarenprodukt nach einem der Ansprüche 1 bis 6, wobei die Kaugummimischung Kaugummistückchen umfasst.

8. Verpacktes Süßwarenprodukt nach einem der Ansprüche 1 bis 7, wobei die Verpackungseinheit vakuumverpackt ist.

9. Verpacktes Süßwarenprodukt nach einem der Ansprüche 1 bis 8, wobei die Verpackungseinheit wenigstens ein Inertgas, wie etwa Stickstoff, umfasst.

10. Verpacktes Süßwarenprodukt nach einem der Ansprüche 1 bis 9, wobei die Moisture Vapor Transmission Rate (MVTR) des Verpackungsmaterials kleiner ist als 2g/m²/24h und vorzugsweise kleiner als 1g/m²/24h mit Bezug auf die DIN 23°C, 85% RH/DIN 53122.

11. Verpacktes Süßwarenprodukt nach einem der Ansprüche 1 bis 10, wobei die biologisch abbaubare Kaugummimischung wenigstens ein harzhaltiges und/oder elastomeres biologisch abbaubares Gummipolymer umfasst.

12. Verpacktes Süßwarenprodukt nach einem der Ansprüche 1 bis 11, wobei das Innenvolumen (18; 28; 38; 48) durch eine Lichtsperre (LB) eingekapselt ist.

13. Verpacktes Süßwarenprodukt nach einem der Ansprüche 1 bis 12, wobei die Kaugummimischung ein Polyesterpolymer, eine Prolaminmischung, wenigstens ein Protein oder Proteinderivat und/oder ein Polyurethanpolymer umfasst.

14. Verpacktes Süßwarenprodukt nach einem der Ansprüche 1 bis 13, wobei die Kaugummimischung als ein mittig gefüllter Kaugummi, komprimierter Kaugummi und/oder nicht umhüllter Streifen-Kaugummi ausgebildet ist.

15. Verpacktes Süßwarenprodukt nach einem der Ansprüche 1 bis 14, wobei die Kaugummimischung mit einer Umhüllung ausgeführt ist.

16. Verpacktes Süßwarenprodukt nach einem der Ansprüche 1 bis 15, wobei die biologisch abbaubare Kaugummimischung ein Nicht-Anhaften an Oberflächen aufweist.

## Revendications

1. Produit de confiserie emballé comprenant une composition de chewing-gum biodégradable (11 ; 21 ; 31 ; 41) et un ensemble d'emballage formant une barrière à l'humidité (13a, 13b ; 23a, 23b ; 33a, 33b ; 44, 45) pour la composition de chewing-gum biodégradable (11 ; 21 ; 31 ; 41), dans lequel la teneur en eau dans l'ensemble d'emballage est inférieure à 2,0 % en poids de la composition de chewing-gum emballée et dans lequel le taux de transmission de vapeur d'eau (MVTR) du matériau d'emballage formant la barrière à l'humidité est inférieur à 3 g/m²/24 h en référence à la norme DIN à 23 °C, 85 % HR/DIN 53122.

2. Produit de confiserie emballé selon la revendication 1, dans lequel la barrière à l'humidité (HB) est scellée.

3. Produit de confiserie emballé selon la revendication 1 ou 2, dans lequel l'ensemble d'emballage comprend un emballage blister, une poche et/ou un récipient en plastique tel qu'un pot, un tube, etc.

4. Produit de confiserie emballé selon l'une quelconque des revendications 1 à 3, dans lequel la barrière à l'humidité comprend un matériau polymère, un matériau en film contenant un polymère, un stratifié, au moins une feuille métallique et/ou au moins une feuille d'aluminium.

5. Produit de confiserie emballé selon l'une quelconque des revendications 1 à 4, dans lequel la composition de chewing-gum est contenue dans l'ensemble d'emballage dans des compartiments scellés individuellement et/ou dans un compartiment scellé partagé.

6. Produit de confiserie emballé selon l'une quelconque des revendications 1 à 5, dans lequel la composition de chewing-gum est contenue dans l'ensemble d'emballage qui est refermable.

7. Produit de confiserie emballé selon l'une quelconque des revendications 1 à 6, dans lequel la composition de chewing-gum comprend des morceaux de chewing-gum.

8. Produit de confiserie emballé selon l'une quelconque des revendications 1 à 7, dans lequel l'ensemble d'emballage est conditionné sous vide.

9. Produit de confiserie emballé selon l'une quelconque des revendications 1 à 8, dans lequel l'ensemble d'emballage comprend au moins un gaz inerte tel que l'azote.

10. Produit de confiserie emballé selon l'une quelconque des revendications 1 à 9, dans lequel le taux de transmission de vapeur d'eau (MVTR) du matériau d'emballage est inférieur à 2 g/m²/24 h, de préférence, inférieur à 1 g/m²/24 h en référence à la norme DIN à 23 °C, 85 % HR/DIN 53122.

11. Produit de confiserie emballé selon l'une quelconque des revendications 1 à 10, dans lequel la composition de chewing-gum biodégradable comprend au moins une gomme polymère biodégradable résineuse et/ou élastomère.

12. Produit de confiserie emballé selon l'une quelconque des revendications 1 à 11, dans lequel le volume interne (18 ; 28 ; 38 ; 48) est encapsulé par une barrière à la lumière (LB).

13. Produit de confiserie emballé selon l'une quelconque des revendications 1 à 12, dans lequel ladite composition de chewing-gum comprend un polymère polyester, une composition de prolamine, au moins une protéine ou un dérivé de protéine et/ou un polymère polyuréthane.

14. Produit de confiserie emballé selon l'une quelconque des revendications 1 à 13, dans lequel la composition de chewing-gum est formée comme un chewing-gum fourré dans sa partie centrale, un chewing-gum compressé et/ou un chewing-gum sous forme de bâton non enrobé.

15. Produit de confiserie emballé selon l'une quelconque des revendications 1 à 14, dans lequel la composition de chewing-gum est formée avec un enrobage.

16. Produit de confiserie emballé selon l'une quelconque des revendications 1 à 15, dans lequel ladite composition de chewing-gum biodégradable présente une surface non collante.
